# EUROPÄISCHE PATENTANMELDUNG

(11) **EP 2 447 394 A1**
(43) Veröffentlichungstag der Anmeldung: **02.05.2012**
(21) Anmeldenummer: 10189123.2
(22) Anmeldetag: 27.10.2010
(51) Int. Cl.: C23C 28/00, C23C 30/00, F01D 5/28

(54) **Wärmedämmschicht mit gerichteter Wärmeabfuhr**

(71) Anmelder: SIEMENS AKTIENGESELLSCHAFT, 80333 München (DE)
(72) Erfinder: Ahmad, Fathi, 41564 Kaarst (DE); Gill, Markus, 49479 Ibbenbüren (DE)

(57) **Zusammenfassung**

Durch die Verwendung von Fasern (13) in keramische Wärmedämmschichten (10) erfolgt eine Wärmeabfuhr aus dem Gebiet mit höherem Wärmeeintrag, wodurch eine Vergleichmäßigung der thermischen Belastung des Bauteils erreicht wird.

## Beschreibung

Die Erfindung betrifft eine keramische Wärmedämmschicht, in der eine längliche Struktur vorhanden ist, die Wärme gezielt und gerichtet ableiten kann.

Wärmedämmschichten werden häufig bei Bauteilen für den Hochtemperatureinsatz verwendet, um den Wärmeeintrag in das Substrat zu verringern. Dies ist z.B. bei Turbinenschaufeln der Fall.

Jedoch weisen diese Bauteile im Bereich der äußeren Oberfläche oft unterschiedliche Wärmebelastungen auf, so dass die Bauteile aufgrund der größten Wärmebelastung ausgelegt werden, wodurch sie an anderer Stelle der Oberfläche überdimensioniert sind.

Es ist daher Aufgabe der Erfindung o.g. Problem zu lösen.

Die Aufgabe wird gelöst durch eine Wärmedämmschicht nach Anspruch 1.

In den Unteransprüchen sind weitere vorteilhafte Maßnahmen aufgelistet, die beliebig miteinander kombiniert werden können, um weitere Vorteile zu erzielen.

Es zeigen:
Figur 1 bis 5 Ausführungsbeispiele der Erfindung,
Figur 6 eine Gasturbine,
Figur 7 Turbinenschaufel,
Figur 8 eine Brennkammer,
Figur 9 eine Liste von Superlegierungen.

Die Beschreibung und die Figuren stellen nur Ausführungsbeispiele der Erfindung dar.

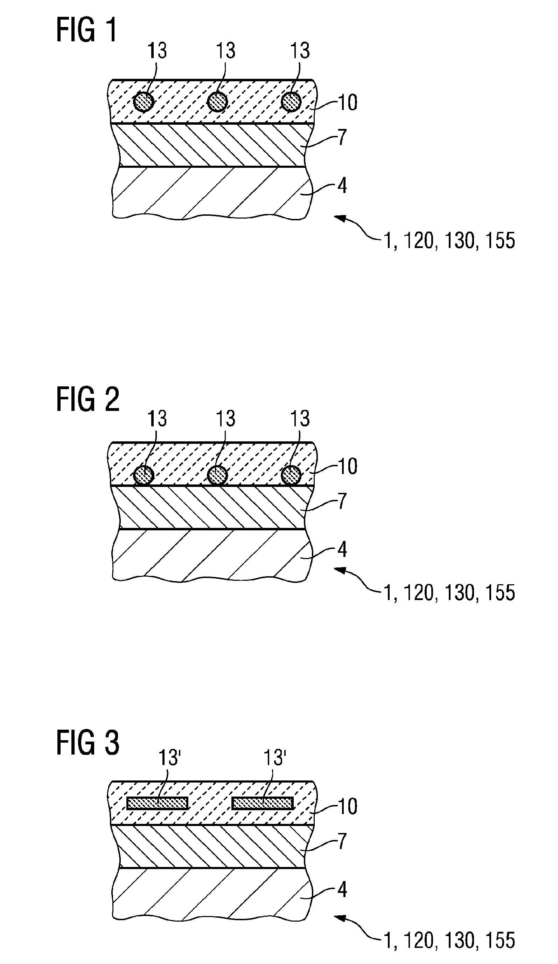

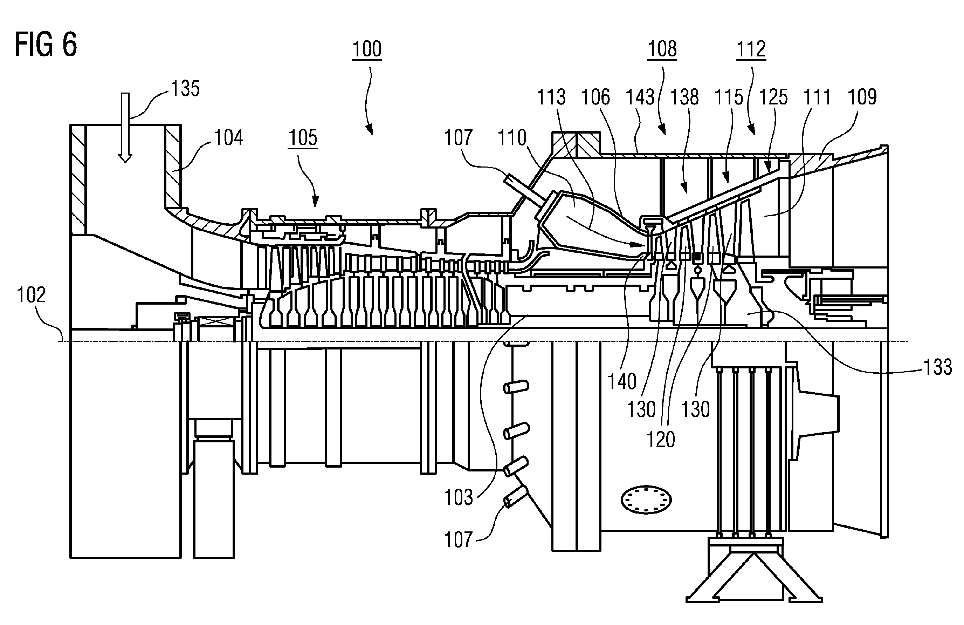

In den Figuren 1 bis 5 ist ein Bauteil 1, 120, 130, 155, insbesondere einer Turbine, insbesondere einer Gasturbine 100 (Fig. 6), für Stromerzeugung gezeigt. Ebenso kann dies eine Dampfturbine oder eine Turbine für die Luftfahrtindustrie sein.

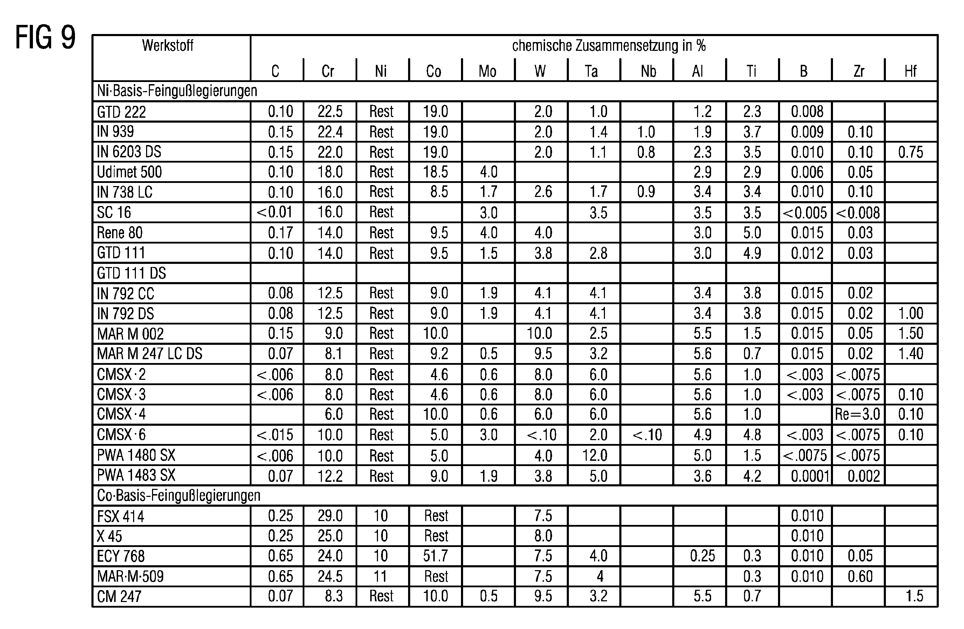

Das Bauteil als Schichtsystem 1 weist ein Substrat 4 auf, das vorzugsweise metallisch ist und ganz vorzugsweise eine Superlegierung gemäß Figur 9 aufweist, insbesondere daraus besteht.

Auf dem Substrat 4 können in verschiedener Art und Weise metallische Haftschichten und/oder Korrosionsschutzschichten 7 in Form von Overlay oder Diffusionsschutzschichten aufgebracht sein. Am häufigsten sind dies Aluminid- oder Platinaluminidschichten, MCrAl- oder MCrAIX-Schichten, wobei die letzten beiden hier insbesondere verwendet werden und die die Schutzschicht 7 bilden.

Auf der Schutzschicht 7 oder auch direkt auf dem Substrat 4 ist eine keramische Wärmedämmschicht 10 aufgebracht. Dies ist vorzugsweise die äußerste Schicht des Schichtsystems 1.

Innerhalb der keramischen Wärmedämmschicht 10 sind längliche Strukturen 13, insbesondere Fasern 13 (an denen die Erfindung nur beispielhaft erläutert wird) vorhanden, die insbesondere eine höhere thermische Leitfähigkeit aufweisen als das Material der keramischen Wärmedämmschicht 10.

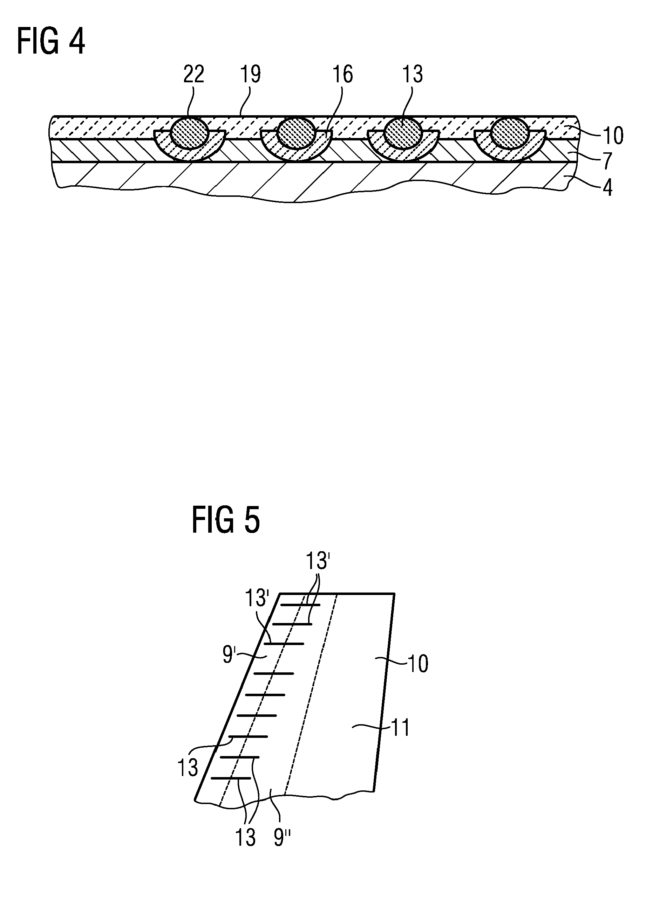

Die Fasern 13 sind in den Bereichen 9' (Fig. 5) des Bauteils 1, 120, 130, 155 mit höherer Wärmebelastung vorhanden. Durch die höhere Wärmeleitfähigkeit der länglichen Strukturen 13 oder Fasern 13 wird die Wärme in die Bereiche 9" (Fig. 5) mit geringerer Wärmebelastung eingetragen, wodurch der Wärmeeintrag in dem Gebiet 9' mit höherer Wärmebelastung reduziert wird und die Wärmebelastung sich innerhalb der gesamten äußeren Schicht vergleichmäßigt.

Das Material der länglichen Strukturen 13 ist vorzugsweise keramisch.

Vorzugsweise sind die Fasern nur lokal flächig verteilt in der Schicht (10) also in nur einem Bereich 9', 9" vorhanden (Fig. 5) und daher vorzugsweise in einem Bereich 11 der Oberfläche nicht.

Die länglichen Strukturen 13, 13' können das Bauteil 120, 130 aber auch vollständig umfangen, also den Umfang bilden.

Die Fasern oder länglichen Strukturen 13 zumindest eines Bereichs 9' verlaufen gerichtet in eine Richtung, insbesondere parallel, bilden also keine Netz- oder Mattenstruktur.

Vorzugsweise sind die länglichen Strukturen oder Fasern 13 vollständig innerhalb der keramischen Schicht 10 vorhanden und ganz vorzugsweise von dieser 10 umgeben (Figur 1).

Ebenso können sie auch auf der metallischen Schutzschicht 7 aufliegen oder berühren (Fig. 2) oder teilweise in die Schutzschicht 7 hineinragen (Fig. 4).

Figur 3 zeigt einen anderen Querschnitt für die länglichen Strukturen 13' oder Fasern 13'.

Diese sind hier rechteckförmig ausgebildet, wobei die größte Ausdehnung des Querschnitts nahezu parallel zur äußeren Oberfläche der keramischen Schicht 10 verläuft.

So wird der Wärmeeintrag in Richtung Substrat 4 durch die höhere Wärmeleitfähigkeit des Materials der länglichen Struktur 13' nur gering erhöht, aber durch die große Querschnittsfläche kann auch genügend Wärme abtransportiert werden. Ebenso können diese rechteckförmigen Strukturen vollständig innerhalb der keramischen Schicht 10, auf der Schutzschicht 7 aufliegen oder teilweise in der Schutzschicht 7 vorhanden angeordnet sein.

Generell gilt für die Figuren 1 bis 5, dass für die Strukturen 13, 13' verschiedene Querschnitte verwendet werden können, wobei die auch innerhalb eines Bauteils 1 miteinander kombiniert werden können.

Figur 4 zeigt ein weiteres Ausführungsbeispiel, bei dem die Fasern 13 teilweise in der metallischen Schutzschicht 7 (oder ein Substrat 4 (nicht gezeigt) angeordnet sind, aber im Bereich der metallischen Schutzschicht 7 von einer keramischen Halbschale 16 umhüllt sind, so dass diese 13' nicht in direkten Kontakt mit der Schutzschicht 7 gelangen.

Die Figur 6 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAIX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAIX kann noch eine Wärmedämmschicht vorhanden sein, und besteht beispielsweise aus Zr0₂, Y₂0₃-Zr0₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

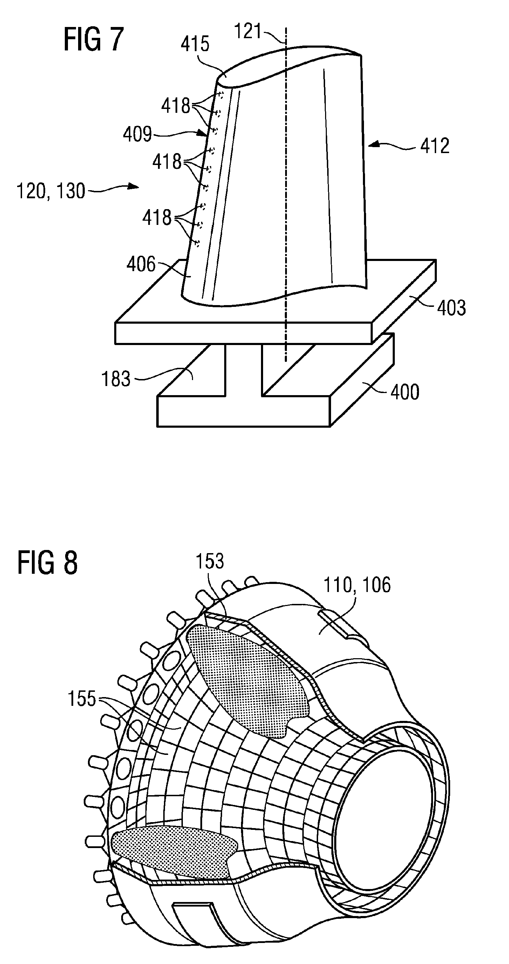

Die Figur 7 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAIX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAIX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-llAl-0,4Y-2Re oder Ni-25Co-17Cr-10A1-0,4Y-1,5Re.

Auf der MCrAIX kann noch eine Wärmedämmschicht vorhanden sein, die vorzugsweise die äußerste Schicht ist, und besteht beispielsweise aus Zr0₂, Y₂0₃-Zr0₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAIX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAIX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 8 zeigt eine Brennkammer 110 einer Gasturbine.

Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAIX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAIX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAIX kann noch eine beispielsweise keramische Wärmedämmschicht vorhanden sein und besteht beispielsweise aus Zr0₂, Y₂0₃-Zr0₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Schichtsystem (1),
insbesondere mit einem metallischem Substrat (4),
das (1) im Einsatz an verschiedenen Stellen seiner äußeren Oberfläche verschiedene Temperaturen erfährt,
das (1) eine äußere,
insbesondere äußerste,
keramische Schutzschicht (10) aufweist,
in der (10) länglichen Strukturen (13) eingebettet sind, wobei die längliche Strukturen (13) aus einem Gebiet mit höherem Wärmeeintrag (9') in ein Gebiet mit einem niedrigeren Wärmeeintrag (9" ) verlaufen.

2. Schichtsystem nach Anspruch 1,
bei dem die länglichen Strukturen (13) vollständig innerhalb der keramischen Schicht (10) angeordnet sind,
insbesondere vollständig von der keramischen Schicht (10) umgeben sind.

3. Schichtsystem nach Anspruch 1,
bei dem die länglichen Strukturen (13) an eine innenliegende,
insbesondere metallische
Schutzschicht (7) oder
ein Substrat (4)
unterhalb der keramischen Schicht (10) angrenzen und insbesondere durch die keramische Schutzschicht (10) nach außen bedeckt sind.

4. Schichtsystem nach Anspruch 1 oder 3,
bei dem die länglichen Strukturen (13) höchstens teilweise in der metallischen Schutzschicht (7) oder in dem Substrat (4) angeordnet sind.

5. Schichtsystem nach Anspruch 4,
bei dem die länglichen Strukturen (13) von einer keramischen Hülle (10) im Bereich der Schutzschicht (7) oder des Substrats (4) höchstens teilweise ummantelt sind,
insbesondere im Bereich der Schutzschicht (7) oder des Substrats (4).

6. Schichtsystem nach Anspruch 1, 3, 4 oder 5,
bei dem die länglichen Strukturen (13) ein Teil (22) der äußeren Oberfläche (19) bilden.

7. Schichtsystem nach Anspruch 1, 2, 3, 4, 5 oder 6,
bei dem der Querschnitt der länglichen Strukturen (13') rechteckförmig ist.

8. Schichtsystem nach einem oder mehreren der vorhergehenden Ansprüche 1 bis 7,
bei dem der Querschnitt der länglichen Strukturen (13) rund, kreis- oder ovalförmig ausgebildet ist.

9. Schichtsystem nach einem oder mehreren der vorhergehenden Ansprüche,
bei dem die längliche Struktur (13) durch eine Faser oder mehrere Fasern gebildet wird.

10. Schichtsystem nach einem oder mehreren der vorhergehenden Ansprüche,
bei dem die länglichen Strukturen (13) nur lokal (9', 9" ) flächig verteilt in der keramischen Schicht (10) vorhanden sind.

11. Schichtsystem nach einem oder mehreren der vorhergehenden Ansprüche,
bei dem alle länglichen Strukturen (13) zumindest eines lokalen Bereichs (9', 9" ) in der keramischen Schicht (10) ausgerichtet und/oder in eine einzige Richtung verlaufen, insbesondere parallel verlaufen.

12. Schichtsystem nach einem oder mehreren der vorhergehenden Ansprüche,
bei dem die länglichen Strukturen (13, 13') keine Netz oder Mattenstruktur bilden.

13. Schichtsystem nach einem oder mehreren der vorhergehenden Ansprüche,
bei dem die länglichen Strukturen (13, 13') ein anderes Material aufweisen als die keramische Schicht (10),
und insbesondere eine höhere thermische Leitfähigkeit aufweisen.

14. Schichtsystem nach einem oder mehreren der vorhergehenden Ansprüche,
bei dem die länglichen Strukturen (13) ein keramisches Material aufweisen,
insbesondere daraus bestehen.

15. Schichtsystem nach einem oder mehreren der vorhergehenden Ansprüche,
bei dem die länglichen Strukturen (13) das Schichtsystem (1) vollständig umfangen.

16. Schichtsystem nach einem oder mehreren der vorhergehenden Ansprüche 1 bis 14,
bei dem die länglichen Strukturen (13) das Schichtsystem (1) nicht vollständig umfangen.

## Geänderte Patentansprüche

### Geänderte Patentansprüche gemäss Regel 137(2) EPÜ.

**1.** Schichtsystem (1),
insbesondere mit einem metallischem Substrat (4),
das (1) im Einsatz an verschiedenen Stellen seiner äußeren Oberfläche verschiedene Temperaturen erfährt,
das (1) eine äußere,
insbesondere äußerste,
keramische Schutzschicht (10) aufweist,
in der (10) länglichen Strukturen (13) eingebettet sind, wobei die längliche Strukturen (13) aus einem Gebiet mit höherem Wärmeeintrag (9') in ein Gebiet mit einem niedrigeren Wärmeeintrag (9") verlaufen,
bei dem die länglichen Strukturen (13) nur lokal (9', 9") flächig verteilt in der keramischen Schicht (10) vorhanden sind.

**2.** Schichtsystem nach Anspruch 1,
bei dem die länglichen Strukturen (13) vollständig innerhalb der keramischen Schicht (10) angeordnet sind, insbesondere vollständig von der keramischen Schicht (10) umgeben sind.

**3.** Schichtsystem nach Anspruch 1,
bei dem die länglichen Strukturen (13) an eine innenliegende,
insbesondere metallische
Schutzschicht (7) oder
ein Substrat (4)
unterhalb der keramischen Schicht (10) angrenzen und insbesondere durch die keramische Schutzschicht (10) nach außen bedeckt sind.

**4.** Schichtsystem nach Anspruch 1 oder 3,
bei dem die länglichen Strukturen (13) höchstens teilweise in der metallischen Schutzschicht (7) oder in dem Substrat (4) angeordnet sind.

**5.** Schichtsystem nach Anspruch 4,
bei dem die länglichen Strukturen (13) von einer keramischen Hülle (10) im Bereich der Schutzschicht (7) oder des Substrats (4) höchstens teilweise ummantelt sind, insbesondere im Bereich der Schutzschicht (7) oder des Substrats (4).

**6.** Schichtsystem nach Anspruch 1, 3, 4 oder 5,
bei dem die länglichen Strukturen (13) ein Teil (22) der äußeren Oberfläche (19) bilden.

**7.** Schichtsystem nach Anspruch 1, 2, 3, 4, 5 oder 6,
bei dem der Querschnitt der länglichen Strukturen (13') rechteckförmig ist.

**8.** Schichtsystem nach einem oder mehreren der vorhergehenden Ansprüche 1 bis 7,
bei dem der Querschnitt der länglichen Strukturen (13) rund, kreis- oder ovalförmig ausgebildet ist.

**9.** Schichtsystem nach einem oder mehreren der vorhergehenden Ansprüche,
bei dem die längliche Struktur (13) durch eine Faser oder mehrere Fasern gebildet wird.

**10.** Schichtsystem nach einem oder mehreren der vorhergehenden Ansprüche,
bei dem alle länglichen Strukturen (13) zumindest eines lokalen Bereichs (9', 9") in der keramischen Schicht (10) ausgerichtet und/oder in eine einzige Richtung verlaufen, insbesondere parallel verlaufen.

**11.** Schichtsystem nach einem oder mehreren der vorhergehenden Ansprüche,
bei dem die länglichen Strukturen (13, 13') keine Netz oder Mattenstruktur bilden.

**12.** Schichtsystem nach einem oder mehreren der vorhergehenden Ansprüche,
bei dem die länglichen Strukturen (13, 13') ein anderes Material aufweisen als die keramische Schicht (10),
und insbesondere eine höhere thermische Leitfähigkeit aufweisen.

**13.** Schichtsystem nach einem oder mehreren der vorhergehenden Ansprüche,
bei dem die länglichen Strukturen (13) ein keramisches Material aufweisen,
insbesondere daraus bestehen.

**14.** Schichtsystem nach einem oder mehreren der vorhergehenden Ansprüche,
bei dem die länglichen Strukturen (13) das Schichtsystem (1) vollständig umfangen.

**15.** Schichtsystem nach einem oder mehreren der vorhergehenden Ansprüche 1 bis 13,
bei dem die länglichen Strukturen (13) das Schichtsystem (1) nicht vollständig umfangen.
